**Europäisches Patentamt**

(19) **European Patent Office**

**Office européen des brevets**

(11) Numéro de publication: **0 029 393**
**B1**

(12) **FASCICULE DE BREVET EUROPEEN**

(45) Date de publication du fascicule du brevet:
01.02.84

(51) Int. Cl.³: **B 60 P 1/46**

(21) Numéro de dépôt: **80401644.2**

(22) Date de dépôt: **17.11.80**

(54) Dispositif de chargement du type hayon élévateur escamotable à l'intérieur d'un véhicule.

(30) Priorité. 16.11.79 FR 7928389

(43) Date de publication de la demande:
27.05.81 Bulletin 81/21

(45) Mention de la délivrance du brevet:
01.02.84 Bulletin 84/5

(84) Etats contractants désignés:
AT BE CH DE GB IT LI LU NL SE

(56) Documents cités:
DE - A - 2 262 080
DE - A - 2 631 741
FR - A - 2 350 985
US - A - 3 826 386
US - A - 4 015 725
US - A - 4 056 203
US - A - 4 121 695
US - A - 4 138 023

(73) Titulaire: **Bourgeois, Jacques, Route de Dampierre,
F-58310 Saint-Amand-en Puisaye (FR)**

(72) Inventeur. **Bourgeois, Jacques, Route de Dampierre,
F-58310 Saint-Amand-en Puisaye (FR)**

(74) Mandataire **Phélip. Bruno et al, c/o Cabinet Harlé &
Phélip 21, rue de la Rochefoucauld, F-75009 Paris (FR)**

## Dispositif de chargement du type hayon élévateur escamotable à l'intérieur d'un véhicule

La présente invention concerne des dispositifs de chargement pour véhicules, du type hayon élévateur.

Les dispositifs de chargement du type hayon élévateur sont destinés à élever des charges du niveau du sol au niveau de la plate-forme d'un véhicule, et inversement.

On connaît déjà des dispositifs de chargement du type hayon élévateur. Ainsi, le brevet US-A-4 015 725 décrit un tel dispositif de chargement qui comporte un montant fixe et un montant télescopique escamotable articulé à sa partie supérieure sur le montant fixe et portant à sa partie inférieure un plateau. Dans ce dispositif, une plaque qui prolonge le plateau est destinée à maintenir le montant télescopique en position inclinée, cette plaque étant articulée sur le véhicule. La mise du dispositif en position repliée nécessite le soulèvement de cette plaque articulée afin qu'elle permette le retour du montant incliné vers le montant fixe.

Les brevets US-A-4 056 203 et US-A-4 138 023 décrivent des dispositifs de chargement du type considéré, dans lesquels le montant télescopique est maintenu en position écartée du montant fixe par deux leviers articulés l'un sur l'autre d'une part et chacun à l'un des deux montants d'autre part. Lorsque le plateau est replié, un toucheau de came vient repousser l'un des deux leviers afin que les deux leviers se replient l'un contre l'autre et permettent au montant articulé de s'approcher du montant fixe. Les mécanismes de déblocage des deux leviers lors du soulèvement du plateau, décrits dans ces deux brevets, sont relativement élaborés car chacun d'eux nécessite, en plus des deux leviers, au moins un autre organe articulé, commandé par un vérin de levage du plateau.

L'invention concerne un dispositif de déchargement du type général décrit précédemment, dans lequel le mécanisme de blocage et de déblocage du montant télescopique dans sa position inclinée est extrêmement simple et robuste. L'invention met en œuvre en particulier un levier unique articulé sur l'un des montants et glissant sur l'autre, le levier étant chassé de sa position de blocage par un toucheau solidaire du plateau lorsque ce dernier est déplacé vers sa position repliée.

Par rapport aux dispositifs de chargement counus, du type hayon élévateur et comprenant

— un montant fixe,
— un montant télescopique dont une première extrémité est articulée sur le montant fixe afin qu'il puisse pivoter entre une première position repliée vers laquelle les forces de pesanteur tendent à la ramener, et une seconde position dipliée,
— un plateau articulé sur la seconde extrémité du montant télescopique, le plateau étant mobile entre une première position repliée et une seconde position dépliée dans laquelle il est sensiblement horizontal, le plateau étant maintenu dans sa seconde position, sous l'action de la pesanteur, par coopération avec une première butée du montant télescopique, et
— un levier mobile entre une première position cepliée dans laquelle le montant télescopique peut prendre sa première position sous l'action de la pesanteur, et une seconde position de blocage dans laquelle il est repoussé et maintenu par le montant télescopique qui occupe alors sa seconde position, le déplacement du levier au-delà de sa seconde position étant interdit par une seconde butée fixée à l'un des montants,

l'invention est caractérisée en ce que

— le levier est en une seule pièce, il délimite une surface de came, et il a une première extrémité articulée sur l'un des montants et une seconde extrémité formant une surface de glissement sur l'autre montant de manière que le levier tende à prendre sa seconde position sous l'action de la pesanteur, et
— le plateau porte un toucheau de came destiné à coopérer avec la surface de came du levier afin que, lorsque le plateau se déplace de sa seconde à sa première position, le toucheau repousse le levier de sa seconde vers sa première position.

Selon une caractéristique avantageuse de l'invention, le levier est articulé sur le montant télescopique, et la surface de came du levier est proche de cette articulation si bien qu'un déplacement peu important du toucheau de came provoque un déplacement bien plus important de l'extrémité qui glisse sur le montant fixe.

Il est aussi avantageux que le levier comporte un dispositif de réglage de la distance comprise entre l'articulation de sa première extrémité et la surface de glissement de sa seconde extrémité, et que le montant télescopique comporte un dispositif de réglage de la position de la première butée, permettant ainsi un réglage de la seconde position du plateau par rapport au montant télescopique.

Dans un mode de réalisation avantageux, le dispositif de chargement comporte deux ensembles identiques ou symétriques comportant chacun un montant fixe, un montant télescopique et un levier, ces deux ensembles étant placés de part et d'autre d'un même plateau. En outre, les deux leviers peuvent porter une plaque destinée à prolonger la surface du plateau lorsque les leviers sont dans leur seconde position.

Il est aussi avantageux qu'un dispositif de verrouillage assure le maintien du montant fixe, du montant télescopique et du plateau dans leur première position repliée.

D'autres caractéristiques et avantages de l'invention ressortiront mieux de la description qui va suivre, faite en référence au dessin annexé sur lequel:

— la figure 1 est une élévation latérale schématique d'un dispositif de chargement selon l'invention, au cours de sa mise en position repliée;
— la figure 2 est analogue à la figure 1 mais représente le dispositif en position totalement repliée; et
— la figure 3 est analogue aux figures 1 et 2 mais représente le dispositif en position dépliée, le plateau et le montant télescopique étant représentés dans deux positions utilisées au cours du fonctionnement.

Le dispositif de chargement selon l'invention est plus spécialement destiné aux petits véhicules ayant une ouverture de faible hauteur, par exemple les breaks et les fourgonnettes.

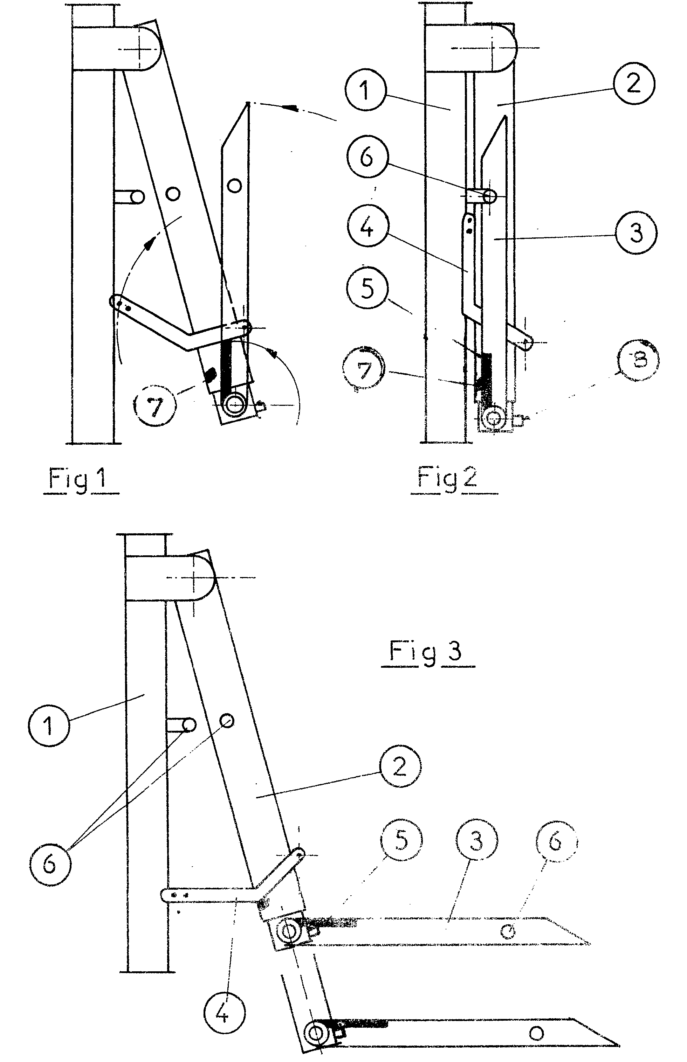

Le dispositif représenté sur les figures 1 à 3 est particulièrement simple et robuste. Il comporte un montant fixe 1, un montant télescopique inclinable 2, articulé à sa partie supérieure sur le montant fixe, et un plateau rabattable 3, articulé à la partie inférieure du montant télescopique. Le plateau 3 peut prendre une position horizontale, comme représenté sur la figure 3, le plateau se trouvant soit au niveau du sol soit au niveau du plancher du véhicule associé selon que le montant télescopique est allongé ou non.

Un levier 4 a une première extrémité articulée sur le montant télescopique et une seconde extrémité qui peut glisser le long du montant fixe 1. Lorsque le montant incliné 2 est écarté du montant fixe 1, le levier 4 s'abaisse sous l'action de la pesanteur en glissant le long du montant 1. Il est finalement arrêté en position basse par une butée 7, solidaire du montant incliné et, lorsque ce dernier est libéré, la seconde extrémité du levier 4 vient prendre appui contre le montant fixe 1 et maintient donc le montant incliné dans la position représentée sur la figure 3. Le levier 4 est alors dans une position de blocage car les forces appliquées par le montant incliné 2 et les forces de pesanteur ont tendance à repousser le levier 4 vers le bas, contre la butée 7.

De préférence, la position de la surface de glissement du levier 4 le long du montant fixe 1 est réglable le long du levier, comme indiqué par deux axes sur les figures, afin que le montant incliné 2 puisse prendre plusieurs inclinaisons choisies par l'utilisateur.

Le plateau 3 est maintenu en position horizontale par appui d'un tasseau 5 contre une butée 8. La position de la butée 8 sur la partie télescopique du montant 2 est réglable afin que l'inclinaison du plateau 3 puisse être réglée, par exemple suivant la longueur choisie pour le levier 4, suivant l'inclinaison du sol, etc.

Le tasseau 5 a une seconde fonction, celle d'un toucheau de came. Comme indiqué sur la figure 1, lorsque le plateau 3 est soulevé à partir de sa position horizontale, l'extrémité du tasseau 5 vient prendre appui contre une surface de came du levier 4 et soulève celui-ci qui est ainsi chassé de sa position de blocage contre le montant fixe 1. Le tasseau 5 repousse ce levier 4 au-delà de la position pour laquelle la droite passant par l'articulation et par la surface de glissement du levier 4 est perpendiculaire à la surface de glissement du montant 1 si bien que, lorsque le levier a été ainsi débloqué, le poids du montant télescopique 2 portant le plateau 3 tend à prolonger le soulèvement du levier 4 jusqu'à ce que celui-ci occupe la position représentée sur la figure 2.

Dans le mode de réalisation très simple représenté sur les figures, on a indiqué, par la référence 6, trois orifices formés respectivement dans le montant fixe, dans le montant incliné et dans le plateau et destinés à coincider lorsque les différents éléments ont les positions représentées sur la figure 2. Une broche de verrouillage peut alors être introduite dans ces orifices 20 et maintient le dispositif en position repliée.

Le dispositif décrit est extrêmement simple et robuste. Lorsqu'il doit être déplié de la position de la figure 2 à celle de la figure 3 et que le dispositif de verrouillage a été retiré des orifices 6, le plateau peut être saisi d'une main et écarté du montant fixe jusqu'à ce que le dispositif prenne et se bloque automatiquement dans la position indiquée sur la figure 3. Un dispositif moteur non représenté permet alors le déplacement du plateau entre les deux positions indiquées sur la figure 3. Lorsque le dispositif doit être plié, le plateau est d'abord ramené dans la position haute de la figure 3. Ensuite, l'utilisateur le replie d'une seule main par simple soulèvement du plateau et rabattement vers le montant fixe. Le tasseau 5 provoque automatiquement le déblocage du levier 4 si bien que l'ensemble se replie dans la position de la figure 2. La broche de verrouillage peut alors être facilement introduite dans les orifices 6.

Il est bien entendu que l'invention n'a été décrite et représentée qu'à titre d'exemple préférentiel.

Ainsi, bien qu'on ait décrit un dispositif dont le levier 4 est articulé sur le montant incliné, le levier peut aussi être articulé sur le montant fixe et peut glisser contre le montant incliné. Les dispositifs de réglage de la longueur du levier 4 et de la butée 8 peuvent être de nombreux types différents bien connus des hommes du métier. Par exemple, le réglage peut être effectué au niveau de l'articulation du levier par disposition d'un axe dans l'un des trous d'une série de trous formés dans le levier. La butée 8 est avantageusement réglée par un simple vérin à vis.

Selon une caractéristique avantageuse, un montant fixe, un montant incliné et un levier sont montés de chaque côté transversal du plateau.

En outre, dans une variante, les leviers 4 peuvent porter une plaque destinée à prolonger la surface de support du plateau 3.

## Revendications

1. Dispositif de chargement pour véhicule, du type à hayon élévateur comprenant

— un montant fixe (1),
— un montant télescopique (2) dont une première extrémité est articulée sur le montant fixe afin qu'il puisse pivoter entre une première position repliée vers laquelle les forces de pesanteur tendent à le ramener et une seconde position dépliée,
— un plateau (3) articulé sur la seconde extrémité du montant télescopique (2), le plateau étant mobile entre une première position repliée et une seconde position dépliée dans laquelle il est sensiblement horizontal, le plateau étant maintenu dans sa seconde position, sous l'action de la pesanteur, par coopération avec une première butée (8) du montant télescopique (2), et
— un levier (4) mobile entre une première position repliée dans laquelle le montant télescopique (2) peut prendre sa première position sous l'action de la pesanteur, et une seconde position de blocage dans laquelle il est repoussé et maintenu par le montant télescopique (2) qui occupe alors sa seconde position, le déplacement du levier (4) au-delà de sa seconde position étant interdit par une seconde butée (7) fixée à l'un des montants,

ledit dispositif de chargement étant caractérisé en ce que

— le levier (4) est en une seule pièce, il délimite une surface de came, et il a une première extrémité articulée sur l'un des montants et une seconde extrémité formant une surface de glissement sur l'autre montant, de manière que le levier tende à prendre sa seconde position sous l'action de la pesanteur, et
— le plateau (3) porte un toucheau (5) de came destiné à coopérer avec la surface de came du levier (4) afin que, lorsque le plateau (3) se déplace de sa seconde à sa première position, le toucheau (5) repousse le levier (4) de sa seconde vers sa première position.

2. Dispositif selon la revendication 1, caractérisé en ce que le levier (4) est articulé sur le montant télescopique (2), et la surface de came du levier est proche de cette articulation si bien qu'un déplacement peu important du toucheau de came provoque un déplacement bien plus important de la surface de glissement le long du montant fixe.

3. Dispositif selon l'une des revendications 1 et 2, caractérisé en ce que le levier (4) comporte un dispositif de réglage de la distance comprise entre l'articulation de sa première extrémité et la surface de glissement de sa seconde extrémité.

4. Dispositif selon l'une quelconque des revendications 1 à 3, caractérisé en ce que le montant télescopique (2) comporte un dispositif de réglage de la position de la première butée (8) permettant un réglage de l'inclinaison de la seconde position du plateau (3) par rapport au montant télescopique (2).

5. Dispositif selon l'une quelconque des revendications précédentes, caractérisé en ce qu'il comporte deux ensembles identiques ou symétriques comprenant chacun un montant fixe (1), un montant télescopique (2) et un levier (4), les deux ensembles étant placés de part et d'autre et transversalement à un même plateau (3).

6. Dispositif selon la revendication 5, caractérisé en ce que les deux leviers (4) portent une plaque destinée à prolonger la surface du plateau (3) lorsque les leviers sont dans leur seconde position.

7. Dispositif selon l'une quelconque des revendications précédentes, caractérisé en ce qu'il comporte un dispositif de verrouillage (6) du montant fixe (1), du montant télescopique (2) et du plateau (3) dans leur première position repliée.

## Patentansprüche:

1. Ladevorrichtung für Fahrzeuge vom Typ eines Laderaumhebezeugs mit

— einer festen Verstrebung (1)
— einer Teleskopverstrebung (2), deren erstes Ende an der festen Verstrebung angelenkt ist, damit diese zwischen einer ersten zurückgeklappten Position, in der die Gewichtskräfte sie in die Ausgangslage zurückziehen, und einer zweiten ausgeklappten Position verschwenkt werden kann,
— einer Platte (3), die am zweiten Ende der Teleskopverstrebung (2) angelenkt ist, wobei die Platte zwischen einer ersten zurückgeklappten Position und einer zweiten ausgeklappten Position, in der sie im wesentlichen horizontal ist, beweglich ist, wobei die Platte in der zweiten Position unter der Einwirkung des Gewichts durch Zusammenwirken mit einem ersten Anschlag (8) der Teleskopverstrebung (2) gehalten wird, und
— einem Hebel (4), der zwischen einer ersten zurückgeklappten Position, in der die Teleskopverstrebung (2) ihre erste Position unter der Wirkung des Gewichts einnehmen kann, und einer zweiten Verriegelungsposition, in der er durch die Teleskopverstrebung (2), die dann die zweite Position einnimmt, zurückgedrückt und gehalten wird, wobei das Verstellen des Hebels (4) aus der zweiten Position durch einen zweiten Anschlag (7), der an einer der Verstrebungen befestigt ist, verhindert wird,

wobei die Ladevorrichtung dadurch gekennzeichnet ist, daß

— der Hebel (4) einstückig ist, eine Nockenfläche begrenzt und ein erstes Ende, das an einer der Verstrebungen angelenkt ist, und ein zweites Ende aufweist, das eine Fläche zum Gleiten auf der anderen Verstrebung derart bildet, daß der Hebel unter der Wirkung des Gewichts dazu neigt, seine zweite Position einzunehmen, und
— die Platte (3) einen Auflaufnocken (5) trägt, der dazu bestimmt ist, mit der Nockenfläche des Hebels (4) zusammenzuarbeiten, damit dann, wenn sich die Platte (3) aus ihrer zweiten in ihre erste Position bewegt, der Auflaufnocken (5) den Hebel (4) aus seiner zweiten in seine erste Position zurückdrückt.

2. Vorrichtung nach Anspruch 1, dadurch gekennzeichnet, daß der Hebel (4) an der Teleskopverstrebung (2) angelenkt ist und sich die Nockenfläche des Hebels nahe bei der Anlenkung befindet, so daß eine geringe Verschiebung des Auflaufnockens eine wesentlich größere Verschiebung der Gleitfläche längs der festen Verstrebung bewirkt.

3. Vorrichtung nach einem der Ansprüche 1 und 2, dadurch gekennzeichnet, daß der Hebel (4) eine Einstelleinrichtung für den Abstand zwischen der Anlenkung an seinem ersten Ende und der Gleitfläche an seinem zweiten Ende aufweist.

4. Vorrichtung nach einem der Ansprüche 1 bis 3, dadurch gekennzeichnet, daß die Teleskopverstrebung (2) eine Einstelleinrichtung für die Position des ersten Anschlags (8) aufweist, die eine Einstellung der Neigung der zweiten Position der Platte (3) in bezug auf die Teleskopverstrebung (2) ermöglicht.

5. Vorrichtung nach einem der vorhergehenden Ansprüche, dadurch gekennzeichnet, daß sie zwei identische oder symmetrische Einheiten umfaßt, die jeweils eine feste Verstrebung (1), eine Teleskopverstrebung (2) und einen Hebel (4) aufweisen, wobei die beiden Einheiten beidseitig von und senkrecht zur selben Platte (3) angeordnet sind.

6. Vorrichtung nach Anspruch 5, dadurch gekennzeichnet, daß die beiden Hebel (4) eine Platte, die zur Verlängerung der Fläche der Platte (3) bestimmt ist, wenn sich die Hebel in ihrer zweiten Position befinden, tragen.

7. Vorrichtung nach einem der vorhergehenden Ansprüche, dadurch gekennzeichnet, daß sie eine Einrichtung (6) zum Verriegeln der festen Verstrebung (1), der Teleskopverstrebung (2) und der Platte (3) in ihrer ersten zurückgeklappten Position umfaßt.

**Claims**

1. Loading device for a vehicle, of the tail-lift type, comprising

— a fixed upright (1),
— a telescopic upright (2), one end of which is articulated on the fixed upright so that it can pivot between a first, folded position, to which the gravitational forces tend to bring it back, and a second, unfolded position,
— a platform (3) articulated on the other end of the telescopic upright (2), the platform being able to move between a first, folded position and a second, unfolded position, in which it is approximately horizontal, the platform being kept in its second position, under the action of gravity, by interaction with a first abutment (8) on the telescopic upright (2), and
— a lever (4) which can move between a first, folded position, in which the telescopic upright (2) can adopt its first position under the action of gravity, and a second, blocking position, in which it is pushed back and held by the telescopic upright (2), which then occupies its second position, the movement of the lever (4) beyond its second position being prohibited by a second abutment (7) fixed to one of the uprights,

the said loading device being characterised in that

— the lever (4) is in a single piece, it delimits a cam surface and it has one end articulated on one of the uprights and the other end forming a sliding surface on the other upright, so that the lever tends to adopt its second position under the action of gravity, and
— the platform (3) carries a cam follower (5) intended to interact with the cam surface of the lever (4) so that, when the platform (3) moves from its second to its first position, the follower (5) pushes back the lever (4) from its second to its first position.

2. Device according to Claim 1, characterised in that the lever (4) is articulated on the telescopic upright (2) and the cam surface of the lever is close to this articulation, with the result that a slight movement of the cam follower causes a much greater movement of the sliding surface along the fixed upright.

3. Device according to one of Claims 1 and 2, characterised in that the lever (4) carries a device for adjusting the distance between the articulation of one of its ends and the sliding surface of its other end.

4. Device according to any one of Claims 1 to 3, characterised in that the telescopic upright (2) has a device for adjusting the position of the first abutment (8), making it possible to adjust the inclination of the second position of the platform (3) relative to the telescopic upright (2).

5. Device according to any one of the preceding claims, characterised in that it includes two identical or symmetrical units each comprising a fixed upright (1), a telescopic upright (2) and a lever (4), the two units being arranged on either side of one and the same platform (3) and transversely thereto.

6. Device according to Claim 5, characterised in that the two levers (4) carry a plate intended for extending the surface of the platform (3) when the levers are in their second position.

7. Device according to any one of the preceding claims, characterised in that it includes a device (6) for locking the fixed upright (1), the telescopic upright (2) and the platform (3) in their first, folded position.

Fig 1

Fig 2

Fig 3